# EUROPEAN PATENT APPLICATION

(11) **EP 2 339 358 A1**
(43) Date of publication of application: **29.06.2011**
(21) Application number: 09180269.4
(22) Date of filing: 22.12.2009
(51) Int. Cl.: G01Q 30/04, G01N 33/50

(54) **Automatic analysis of bio-molecules**

(71) Applicant: Technische Universität Dresden, 01069 Dresden (DE); Labudde, Dirk, 01127 Dresden (DE); Dressel, Frank, 01069 Dresden (DE); Andreopoulous, Bill, 01307 Dresden (DE)
(72) Inventor: Labudde, Dirk, 01127, Dresden (DE); Dressel, Frank, 01069, Dresden (DE); Andreopoulous, Bill, 01307, Dresden (DE); Schroeder, Michael, 01309, Dresden (DE)
(74) Representative: Schmitz, Alexander

(57) **Abstract**

A method and a device for automatic analysis of bio-molecules are proposed. The method comprises providing a plurality of force-distance curves of a bio-molecule to be analyzed (S1), fitting a model to each of the plurality of force-distance curves (S7) to obtain a respective individual model curve aligning the plurality of individual model curves (S8). Thereby, providing comparable force-distance curves which allow an easier and more efficient analysis of the bio-molecules under investigation

## Description

### Technical field of the invention

The present invention relates to automatic analysis of bio-molecules. Particularly, the present invention relates to a method for automatic analysis of bio-molecules, a device for automatic analysis of bio-molecules, a computer program element adapted to perform the mentioned method when executed on a computer and a computer program product on a machine-readable carrier comprising the mentioned method program.

### Background of the invention

Membrane proteins play a particular role in drug discovery. These protein molecules are bound to cellular membranes or traverse the cellular membranes, respectively. Cells are the basic modules of living organisms. Cellular membranes delimit cells from the outer milieu and create different confined reaction spaces that are separated from each other in the intracellular space.

The specific communication between different cellular compartments takes place through membrane bound or membrane spanning proteins (TM-proteins) and protein complexes. The central importance of membrane proteins can be visualized from a genetic and/or pharmacological point of view: Almost one third of the known gene sequences encode for membrane proteins which also provide more than half of all drug targets for innovative therapeutics. The knowledge of the characteristics of membrane proteins (in particular the structure-function-relation) is therefore of central importance for medicine and pharmacology.

However, in order to be able to benefit from the biology of membrane proteins by pharmacological intervention, the spatial structure of these rather large biomolecules has to be elucidated in molecular detail. Until now such studies have been performed for less than 1% of all membrane proteins. Currently a plethora of biochemical, biotechnological, biophysical and structure-elucidation methods (IR, NMR, FTIR) are used in order to characterize membrane proteins or parts thereof in more detail. At the moment, detailed structural information of molecules displaying the size of membrane proteins (>20 kD) can only be obtained by virtue of electron microscopy, or X-ray diffraction of protein crystals, respectively. To this end rather large quantities of protein have to be expressed and later purified in time- and effort-consuming isolation protocols from natural cellular material. Due to their hydrophobic character membrane proteins are very difficult to prepare. Thus the structural elucidation of membrane proteins using traditional methods (X-ray crystallography and NMR) is fraught with great difficulties. The reason lies in the tedious and complex experiments that are necessary for the elucidation of structures as described above. Further only snapshots of these very dynamical proteins can be obtained under rather static conditions using these traditional methods.

In the last years single molecule force spectroscopy (SMFS) has developed into a method with which membrane proteins can be investigated faster and easier. Through steady advancement of these methods also the quality of the results and their significance was improved. Currently it is possible to perform thousands of single measurements of membrane proteins (with or without bound active substances) automatically. The SMFS-method delivers a large spectrum of different information. Using the SMFS-method the following insights into the structure-function-relation of proteins can be obtained:
1. Investigations regarding protein stability on the molecular level
2. The influence of point mutations regarding the protein stability
3. Investigations of proteins under various physiological conditions
4. Detection of binding and determination of the location of binding of active substances and their targets
5. Identification of protein-protein interactions
6. Statements regarding the binding forces between active substances and their targets
7. Statements regarding the width of the potential barrier for mechanisms of interaction.

The development of measuring apparatuses achieved a state in which experiments may be performed on single molecules with a high throughput. The measuring apparatuses may analyze a sample fully automatically and may output the result in the form of a huge quantity of force curves. The output rate may be about 40.000 measurements per experiment which may be acquired within 24 hours. In analogy to other methods the analysis and evaluation of the measured data represents a huge part of the scientific work and is very important for a high quality of the results.

The curves acquired during one experiment may be shifted against each other which may be an effect of the apparatus or may be ascribed to the differing connection point of the cantilever and the bio-molecule. A comparison of the force-distance curves is not possible with the shifts included in the curves. Furthermore, only matching curves in relation to position, dimension and further factors may be compared.

From EP 2 053 379 A1a method and an apparatus for analysis of force traces is known. The method comprises a transformation and autocorrelation of force traces. The autocorrelation step may be very time, memory capacity and cost consuming.

Further methods applied nowadays for selecting appropriate curves for comparison and further processing are performed at a very elementary level. The clustering of the curves to be analyzed is accomplished manually. This analysis is very time- and thus also cost-consuming. Moreover, this analysis depends on the subjective opinion of the user.

### Summary of the invention

Accordingly, there may be a need for an improved analysis of bio-molecules.

These needs may be met by the subject-matter according to the independent claims. Advantageous embodiments of the present invention are described in the dependent claims.

According to a first aspect of the present invention, a method for an automatic analysis of bio-molecules is presented. The method comprises: providing a plurality of force-distance curves of a bio-molecule to be analyzed, fitting a model to each of the plurality of force-distance curves to obtain a respective individual model curve, aligning the plurality of individual model curves.

In other words, the first aspect of the present invention may be seen as based on the idea to provide comparable force-distance curves which allow an easier and more efficient analysis of the bio-molecules under investigation. To this purpose force-distance curves are generated for example by immobilizing a bio-molecule on a substrate, pulling with an AFM tip attached at the free end of the bio-molecule and acquiring the resulting deflection of the cantilever. After the generation of the force-distance curves a model is fitted to each force-distance curve, thereby providing individual model curves. Furthermore, the individual model curves are aligned with respect to each other.

The method described above provides the possibility to analyze bio-molecules with a high speed and a high throughput. At the same time the analysis implemented with such a method is automatic which provides objective results not dependent on the experience and subjective opinion of a user. Moreover, the method described above may provide results with a high quality and high accuracy. Moreover, the method may help to save memory capacities, time and costs.

In the following, possible features and advantages of the method according to the first aspect will be explained in detail.

The analysis of the bio-molecules is automatic which may denote that the analysis is not dependent on any user interactions. For example, the analysis may be executed without the necessity of human contributions or interactions after for example an initial triggering. Such a triggering may be the activation of a start button on a computer display.

The analysis may include an interpretation, an altering and/or manipulation of data such as force-distance curves received from the bio-molecules. The analysis may correspond to an investigation of components and parts of the bio-molecules and their interactions.

Therein, bio-molecules may for example be organic molecules such as nucleic acids or proteins. Particularly, bio-molecules may be naturally occurring and/or synthetic nucleic acids, nucleotides, poly-nucleotides like DNA and RNA; proteins, polypeptides, peptides and any modified polypeptides like glycoproteins, proteoglycans and phosphorylated proteins; lipids, fatty acids and the like; and saccharides and any combinations hybrids and variants thereof The bio-molecule may be a protein also explicitly envisioned as a wild type and any mutation thereof. For example the mutants may be deletion mutants, point mutants, mutants comprising at least one of structural, catalytic functional and/or binding domain and any combination thereof.

The providing of a plurality of force-distance curves may correspond to generating of data during an experiment and/or acquiring or retrieving data from a data base.

Each of the provided force-distance curves is fitted to a model. The fitting may correspond to an adjustment of the data such as measurement points to a model such as the Worm-Like-Chain (WLC) model, a Freely-Joint-Chain (FJC) model and/or a Freely Rotating Chain (FRC) model. Moreover, the model may be any model or algorithm adapted to describe the behavior of polymers, particularly flexible and/or semi-flexible polymers. The fitting may include dividing the force-distance curve into segments or regions with positive, negative and near zero increase or slope.

Segments with an increasing slope followed by segments with a decreasing slope or gradient indicate force maxima. The force maxima may be linked or associated to WLC signals.

With the help of a contour length of the WLC signal it is possible to provide a classification or an indexing of the detected maximum into basic and secondary signals. Therein, the basic signals may correspond to the main unfolding path of the bio-molecule and the secondary signal may correspond to secondary unfolding paths of the bio-molecules.

The individual model curves received in the fitting step are aligned with respect to each other.

Therein, aligning may denote bringing respective curves into corresponding and/or desirable coordination correlation. The alignment may denote the adjustment of curves to each other corresponding to the measured or derived WLC signals. The aligning may be comparable to sequence alignment.

With the help of measuring force-distance curves of a bio-molecule under different conditions and the comparison of the single experiments, information may be derived on possible agents such as for example medical or pharmaceutical agents which may be effective when combined with the analyzed bio-molecule. Thus, by carrying out the necessary experiments and analyzing the results with the help of the method as described above, an agent search may be done. For this purpose, bio-molecules are measured and analyzed with and without different ligands and/or agents. The force-distance curves acquired in this way are compared taking into account the desired criteria, characteristics and/or properties such as, for example, the magnitude of the binding forces and the kind of the binding. Subsequently, adequate ligands may be determined or identified.

According to an exemplary embodiment of the present invention, the method further comprises filtering the force-distance curves exceeding a predetermined threshold.

The filtering step may be executed after a discretizing step and in parallel to a fitting step. The force-distance curves may be filtered according to different criteria. Therein, the following filtering criteria may be taken into account (the filtering criteria may be altered or influenced by a user): for example, the slope of the free region in the force-distance curve may not exceed a certain threshold. I.e. curves containing force points greater than a predetermined threshold may be filtered.

Filtering may denote to exclude the filtered curves from further consideration or to assign them to a certain group of curves. A further filtering criterion may be the requirement that no segment of the curve is distinctly (compared to the standard deviation) under a force of the zero. Furthermore, an adequate WLC signal may be requested. Therein, an adequate WLC signal may denote that enough points of the curve mach with the signal. A further filtering criterion may be that no WLC signal is located in the free region of the curve. In the case that this criteria is not fulfilled the bio-molecule may be longer than expected.

Another criterion for filtering may be that the maximum force of a force-distance curve is under a predetermined threshold. The next filtering criteria may be that the length of the curve is not below a certain threshold. For example, the length of the curve may be longer than the bio-molecule to ensure that the bio-molecule is displaced or disconnected from the substrate at the end of the pulling process.

The predetermined threshold which may be exceeded by the force-distance curves may be a threshold preset by a user or alternatively a threshold retrieved from a data base.

By filtering the force-distance curves the curves adequate for further analysis may be selected and the total number of the curves to be analyzed may be reduced. Thereby, the analysis may be done faster. Furthermore, due to the selection of adequate curves the accuracy of the analysis may be enhanced.

According to a further embodiment of the present invention, the method further comprises clustering the plurality of aligned individual model curves.

The clustering description is schematic only. Clustering of the curves may denote the grouping of a certain number of similar curves i.e. curves with identical or similar characteristics.

For clustering the curves a similarity to other curves may be determined for each single curve. Therein, the similarity may be determined by the number and the location of matching or identical WLC signals. The similarity to other curves and also the most similar curves may be saved in a data base or memory for each single curve for example in the form of an index and/or matrix. The entries of the data base may be indexed according to their similarity. Therein, for each curve the maximal similarity to other curves and the most similar curves are indexed. Subsequently, the curves may be combined to groups. Therein, a curve together with its most similar curves is combined to a group. The curves with the second most and third most and so on similarity are combined to groups such that in the case of an overlap they are declared as offspring of the other groups.

By clustering the plurality of aligned individual model curves, the analysis of the bio-molecules is further simplified. Moreover, the clustering supports a linear performance of the method which may for example be executed as an algorithm on a computer.

According to a further embodiment of the present invention, providing a plurality of force-distance curves comprises discretizing and smoothing each of a plurality of individual measure points of force-distance relation by combining the individual measurement points to a force-distance curve, averaging the force-distance curves and shifting the force-distance curves at a normative point of origin.

The free region of an experiment may denote a condition in which the bio-molecule is completely unfolded and disconnected from the substrate. For discretizing the force-distance curves the free region of the experiment is determined. It may be assumed that the free region begins at a distance signal longer than the length of the bio-molecule.

After determining the free region, the standard deviations with respect to the force direction and with respect to the distance direction are determined in the free region. In the case that no value may be determined by this procedure, a default value may be assumed. The default value may correspond to the resolution of known SMFS devices.

As a further step in discretizing and smoothing of the force-distance curves the axes (i.e. force and distance axis) are divided into segments. Therein, the width of the segments corresponds to the standard deviation. Subsequently, all data points comprised in one segment are averaged. The number of data points in each segment and the knowledge on the standard deviations makes it possible to estimate the deviation.

After this smoothing process, the curves may be shifted such that the mean value of the free region is located at force zero. Therein, the curve is shifted along the force axis. A corresponding shift along the distance axis may provide a curve in which the point corresponding to a change between the negative and positive force is located at a distance zero.

The step of discretizing and smoothing the curves may take place before a filtering step. The discretizing and smoothing step may render the curves more comparable and provide a better representation of the distance curves.

According to a further embodiment of the present invention, the predetermined threshold is at least one parameter of a group, consisting of a number of extrema of the force-distance curve, the overall shape of the force-distance curve, extreme values of the force-distance curve and the length of the force-distance curve.

According to a further embodiment of the present invention, the model is a worm-like-chain model. Therein, fitting a worm-like-chain model comprises determining contour lengths for each individual measurement point and combining adjacent contour lengths. Therein, extrema from a resulting frequency distribution are used as detected contour lengths.

The WLC model describes the force which is necessary to stretch a polymer of a certain contour length to the length x. In force spectroscopy experiments the measured force and the measured length may be used to calculate the unknown contour length of the unfolded polymer region.

A force maximum of the measured force-distance curve may be denoted as a WLC signal in the case that the data points located before the force maximum obey the WLC model i.e. the WLC signal is applicable to the points before the force maximum which means the measured force corresponds to the theoretically expected value.

The WLC model makes it possible to assign the signals of the force-distance curves to the sequence of the bio-molecule. The WLC model describes the slope of the force which is necessary to unfold a certain region of the bio-molecule. The free parameter of the WLC model is the length of the already unfolded parts of the bio-molecule i.e. the contour length. The WLC model is fitted to the increasing slope regions of the force-distance curves if the curves exceed a certain minimal threshold. In a region of the force-distance curves selected for the fitting to the WLC model a contour length is determined for each of the data points. Neighboring contour lengths may be grouped together. Extrema such as a maximum of the resulting frequency distribution are used as detected contour length in the curve of measured signals.

The fitting of the force-distance curves to the worm-like-chain model may help to identify the stable regions of a protein. Thus, the fitting of the force-distance curves to the worm-like-chain model helps in the analysis of bio-molecules.

According to a further embodiment of the present invention, aligning the plurality of individual model curves comprises correcting shifts of the individual model curves. Therein, the aligning is carried out as an alignment relative to contour length of the individual model curves, so that a plurality of individual model curves overlap.

The aligning of the plurality of the individual model curves may correspond to a correction of the cantilever position by shifting the curves. For measuring the mechanical unfolding of the bio-molecules, the bio-molecules may be immobilized between a surface (like a substrate) and a cantilever. Therein, the basis of the cantilever may be adjusted at a sub-nanometer scale.

The force necessary to increase the distance between the substrate and the tip of the cantilever is determined by measuring the deflection of the cantilever. However, the amino-acid at which the cantilever is coupled with the bio-molecule may not be determined exactly. For example, if the cantilever is connected not to the first but to the tenth amino-acid of the protein, the resulting force-distance curves are shifted against each other by 10 amino-acids. In the case of several WLC signals per curve, it may be difficult to determine which WLC signals of the first curve correspond to signals of the second curve. A progressive alignment may be used to compare the single curves based on the determined WLC signals. Each curve may be compared and shifted within thresholds which may be defined by a user in such a way that it fits optimally to the other curves. A curve may fit optimally if it comprises the most possible number of WLC signals of other curves. For example, the following curves A and B may be compared: A has WLC signals at 10, 20 and 30 and B has WLC signals at 15, 25 and 35. Curve B may be shifted by 5 amino-acids to correspond to curve A.

According to a further embodiment of the present invention, clustering the plurality of aligned individual model curves is carried out based on the result of fitting and aligning with indexing of the individual model curves. The method further comprises storing for each individual model curve the similarity to other individual model curves and the most similar individual model curves according to the most agreements in number and position of extrema of the individual model curves as entries in a data base; indexing the entries of the data base according to the similarity, therein, for all individual model curves the maximum similarity to other individual model curves and the most similar individual model curves are indexed; the method further comprises combining the individual model curves into groups, therein, first individual model curve having the greatest similarity together with their most similar individual model curves are combined in a group; and combining the individual model curves having the second next largest similarity, so that when individual groups overlap, these groups are entered as offspring of a previous group.

According to a further embodiment of the present invention, the method further comprises correlating forces of the individual model curves and a number extrema of the individual model curves with at least one of a secondary and a tertiary structure of bio-molecules to be analyzed.

The tertiary structure of the bio-molecule corresponds to the specific atomic positions of the atoms in the three-dimensional space.

By correlating the forces and the number of WLC signals to the secondary and the tertiary structure of the bio-molecule, the force-distance curves are interpreted such that the unfolding properties of the bio-molecule yield information on the structure of the bio-molecule.

According to a further embodiment of the present invention, discretizing and smoothing of the plurality of measured force-distance curves comprises: determining a free region by completely unfolding and separating a bio-molecule to be analyzed from the substrate; determining in the free region standard deviations in the force direction and the distance direction; dividing the force direction and the distance direction into sections of a width of the standard deviations; determining all data points lying in the same section and estimating an error based on the number of data points per section and the standard deviations and shifting the force-distance curves so that an average of the free region lies at the force of zero and a point at which the force-distance curve changes from negative to positive force for the first time lies at the distance of zero.

According to a further embodiment of the present invention, the method further comprises representing interaction energies of amino acids of the bio-molecule to be analyzed in an energy profile in the form of an energy over a reaction coordinate for the bio-molecule and correlating the interaction energies with forces and a number of extrema of the individual model curves so that stable and unstable regions of a protein and possible binding points can be identified.

With the help of known protein structures an energy may be assigned to each amino-acid. This energy reflects the chemical properties of the amino-acids such as the hydrophobicity and the properties of the environment. These energies may be plotted or displayed in a so called energy profile for a wild type and possible mutations thereof. In the energy profile, the energy may be plotted over a reaction coordinate representing for example a sequence of the amino-acids.

The reaction coordinate may be an abstract coordinate representing a reaction pathway between for example a receptor and a ligand i.e. an antibody and an antigen. The reaction coordinate may also coincide with a real coordinate system such as bond length and bond angle.

An energy profile may allow for a fast identification of stable and unstable regions of the bio-molecule such as a protein by measuring the force-distance curves for the wild type and mutations thereof. By comparing the curves and identifying the differences between the wild type and the mutants a more exact identification of amino-acids involved in strong bindings is possible. Thus, also an identification of possible binding sites may be possible. An example for a wild type and mutations may be the following point mutations of Bacteriorhodopsin: wild type: 6R, Mutation: P50A.

According to a further embodiment of the present invention, the method further comprises determining information by text mining about the bio-molecule and possible mutations and their effects and correlating the information with the forces and the number of extrema of the individual model curves.

For text mining known data for example from a data base is used for the interpretation of measured force-distance curves. Based on the sequence of the protein, i.e. the sequence of the amino-acids and based on the name of the protein information concerning the bio-molecule and possible mutations and their effects may be determined with the help of text mining. This information may help to interpret the measured force-distance curves.

According to a further aspect of the present invention a device for the automatic analysis of bio-molecules by investigating force-distance curves is presented. The device comprises a module for discretizing and smoothing each of an individual measurement point of a force-distance relation by combining each of a plurality of individual measurement points to a force-distance curve, averaging the force-distance curve and shifting the force- distance curve at a normative point of origin; a module for filtering force-distance curves extending a predetermined threshold, therein the predetermined threshold is at least one parameter out of a group, the group consisting of a number of extrema of the force-distance curve, a position of the force-distance curve, a force of the force-distance curve and the length of the force-distance curve; a module for fitting a worm-like-chain model to each of the plurality of force-distance curves to obtain a respective individual model curve, therein the fitting module comprises an entity for determining contour lengths for each individual measurement point and combining adjacent contour lengths, therein extrema from a resulting frequency distribution are used as detected contour lengths; a module for aligning the plurality of individual model curves, therein the module for aligning comprises an entity for correcting shifts of the individual model curves, therein the aligning is an alignment relative to contour lengths of the individual model curves, so that a plurality of individual model curves overlap and a module for clustering of aligned individual model curves based on the result of fitting and aligning with indexing of the individual model curves. Moreover, the module for clustering further comprises a storing entity for storing each individual model curve the similarity to other individual model curves and the most similar individual model curves according to the most agreements in number and position of extrema of the individual model curves as entries in a database; an indexing entity for indexing the entries of the database according to the similarity, therein for all individual model curves the maximum similarity to other individual model curves and the most similar individual model curves are indexed; a first combining entity for combining the individual model curves into groups therein first the individual model curve having the greatest similarity together with their most similar individual model curves are combined in a group and a second combining entity for combining the individual model curves having the second next largest similarity so that when individual groups overlap, these groups are entered as offspring of a previous group. Therein, the module for discretizing and smoothing, the module for filtering, the module for fitting, the module for aligning and the module for clustering are successively implemented and interlinked in a data processing system so that the forces and the number of extrema of individual model curves can be determined.

The device may comprise several modules in a data processing system. The modules may be linked or interconnected such that the force-distance curves may be analyzed automatically and at a high speed. Therein, an adequate shift of the curves may provide an improved comparability of the curves.

According to a further aspect of the present invention, a computer program comprising a program code for executing the method for an automatic analysis of bio-molecules according to the embodiments described above is presented. Therein, the computer program is adapted to run on a computer.

According to a further aspect of the present invention, a computer program product on a machine-readable carrier being adapted for executing a method for an automatic analysis of bio-molecules according to an embodiment described above is presented. The computer program product is adapted to execute the method when it runs on a computer.

It has to be noted that embodiments of the invention are described with reference to different subject matters. In particular, some embodiments are described with reference to method type claims whereas other embodiments are described with reference to apparatus type claims. However, a person skilled in the art will gather from the above and the following description that, unless other notified, in addition to any combination of features belonging to one type of subject matter also any combination between features relating to different subject matters is considered to be disclosed with this application.

The aspects defined above and further aspects, features and advantages of the present invention can also be derived from the examples of embodiments to be described hereinafter and are explained with reference to examples of embodiments. The invention will be described in more detail hereinafter with reference to examples of embodiments but to which the invention is not limited.

### Brief description of the drawings

Fig. 1A shows a cytoplasmatic surface of a purple membrane scanned with an AFM before the unfolding of a Bacteriorhodopsin
Fig. 1B shows a force-distance curve acquired during the unfolding of a Bacteriorhodopsin
Fig. 1C shows the cytoplasmatic surface of a purple membrane shown in Fig. 1A after the unfolding of the Bacteriorhodopsin
Fig. 2A to 2D show the unfolding processes of single secondary structures of Bacteriorhodopsin and the schematic unfolding process
Fig. 2E shows main unfolding paths of secondary structures of Bacteriorhodopsin and the schematic unfolding process
Fig. 3 shows the schematical mapping of structural regions of membrane proteins which establish molecular interactions
Fig. 4A shows unfolding forces measured with velocity dependent force spectroscopy on Bacteriorhodopsin
Fig. 4B shows schematically a potential landscape of the secondary structure elements of Bacteriorhodopsin
Fig. 5 shows force-distance curves of antiporter NhaA depending on the pH value
Fig. 6 shows schematically the ph dependent measurements of the activation of the antiporter NhaA
Fig. 7 shows schematically a method for automatic analysis of bio-molecules according to an exemplary embodiment of the invention
Fig. 8 shows schematically a device for automatic analysis of bio-molecules according to an exemplary embodiment of the invention

### Detailed description of embodiments of the invention

The figure illustrations are schematic only. It is noted that in different figures, similar or identical elements are provided with the same reference signs.

In the following several examples of applications of the SMFS-method are shown.

The SMFS method is based on atomic force microscopy (AFM). By scanning a so-called cantilever over the surface of a probe the surface may be imaged with a very high resolution up to 0.1 nm.

In a modified application of the atomic force microscope (AFM) the cantilever may be used for manipulating single molecules such as for example for pulling molecules out of their natural membrane. A further possibility for manipulating the molecules is to immobilize a single molecule between an appropriate substrate and the cantilever of the microscope and to increase the distance between the cantilever and the substrate subsequently. Due to the resulting force the molecule such as for example a protein is unfolded. The resulting force-distance curves contain information on the structure of the protein such as the locations of stable bonds and the degree of their stability. The force-distance curves may also comprise information on intra-molecular forces such as the binding force of antibodies and the stability of biomolecules.

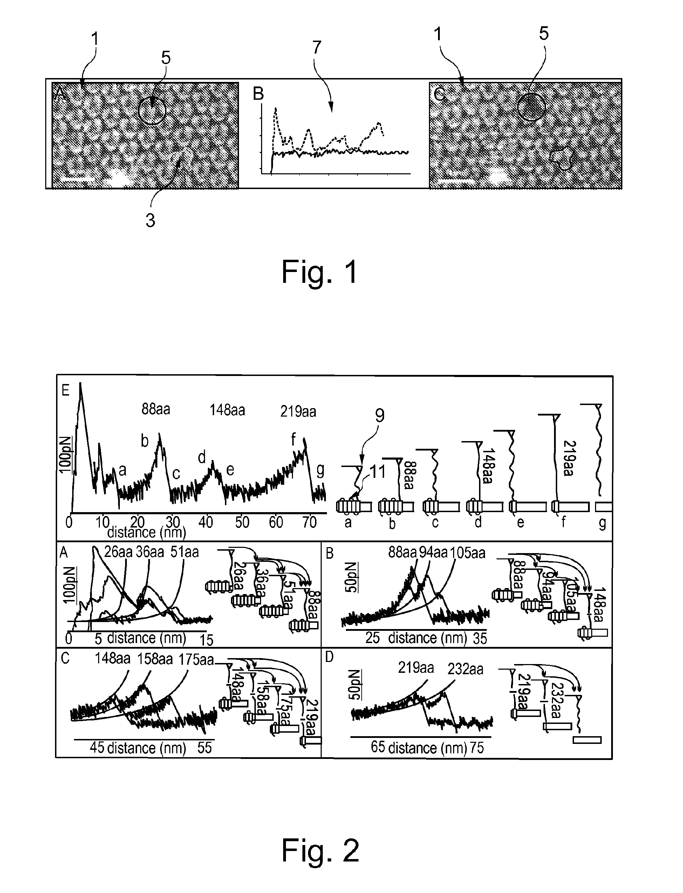

In Fig. 1 the scanning and manipulation of a molecule is presented using the example of Bacteriorhodopsin. A plurality of force-distance curves 7 shown in Fig. 1B which are acquired during the unfolding process may be analyzed with the help of the method according to the invention.

The surface of a purple membrane 1 is scanned as shown in Fig. 1A. The single Bacteriorhodopsins form trimers 3 which are arranged in a hexagonal grid. After the scanning of the cytoplasmatic surface of the purple membrane 1 one Bacteriorhodopsin 5 is selected. In Fig. 1A the chosen Bacteriorhodopsin 5 is marked with a circle. The tip of the AFM is brought into contact with the chosen Bacteriorhodopsin 5 and the force of for example circa 0.5 nN is exerted so that the C terminal end of the protein is adsorbed to the tip of the AFM cantilever. After a contact of about 1 s the cantilever tip is withdrawn from the membrane and at the same time the deflection of the cantilever of the AFM is measured. At a pulling force of about 0.2 nN the single structure elements of Bacteriorhodopsin begin to unfold as is shown in Fig. 1B.

The resulting force spectrum shown in Fig. 1B is a typical force-distance curve 7 which allows assigning a certain mechanical stability to the single secondary structure elements of the membrane protein. Therein, the x-axis shows the distance and the y-axis shows the required force. After the measurement of the force-distance curves 7 the same area of the purple membrane 1 is scanned again to make sure that the acquired spectrum may be assigned to a single protein as shown in Fig. 1C.

In Fig. 2 the interpretation of a typical force curve of Bacteriorhodopsin is shown. The interpretation of a typical force curve provides information on the stability of the secondary structures of a protein and the single elements thereof. The interpretation of a typical force curve of Bacteriorhodopsin is shown in Fig. 2. Fig. 2E shows main unfolding paths of secondary structures of Bacteriorhodopsin. In the left part of Fig. 2E the unfolding spectrum of a single Bacteriorhodopsin is shown. During the unfolding all seven transmembrane alpha-helices of Bacteriorhodopsin are sequentially unfolded in steps (a) to (g). In the right part of Fig. 2E the unfolding is shown schematically.

When the AFM tip 9 is withdrawn from the membrane surface at first unspecific forces between the surfaces are overcome. This process is visible in the first great force maximum at about 5nm in Fig. 2E. These forces overlap the unfolding of G and F (between 5-15nm). During further withdrawal of the tip from the surface the C terminal end of the Bacteriorhodopsin polypeptide which is adsorbed at the tip of the AFM and the unfolding helices G and F is stretched which results in an ascending non-linear force. At a certain force the next two transmembrane helices D and E are unfolded and the force falls back to zero (c). The tip of the cantilever is removed further from the surface of the protein membrane and the unfolded polypeptide chain of these helices is stretched so that the force rises again. At a certain force the next two secondary structure elements are unfolded (d).

The gradual non-linear decrease of the force between the unfolding of the structures may be fitted with the Worm-Like-Chain (WLC) model. The only free parameter which may be varied in this fit is the contour length of the stretched polypeptides. The length of the polypeptide which may be derived from this fit indicates the position of the potential barrier within the membrane protein. The fitted contour lengths of the force spectrum show that the transmembrane helices G and F, D and E and B and C unfold pair-wise. The seventh helix A is then pulled from the membrane with a single step. Then, the complete membrane protein is unfolded

In Fig. 2A-D the unfolding processes of single secondary structures are shown in detail.

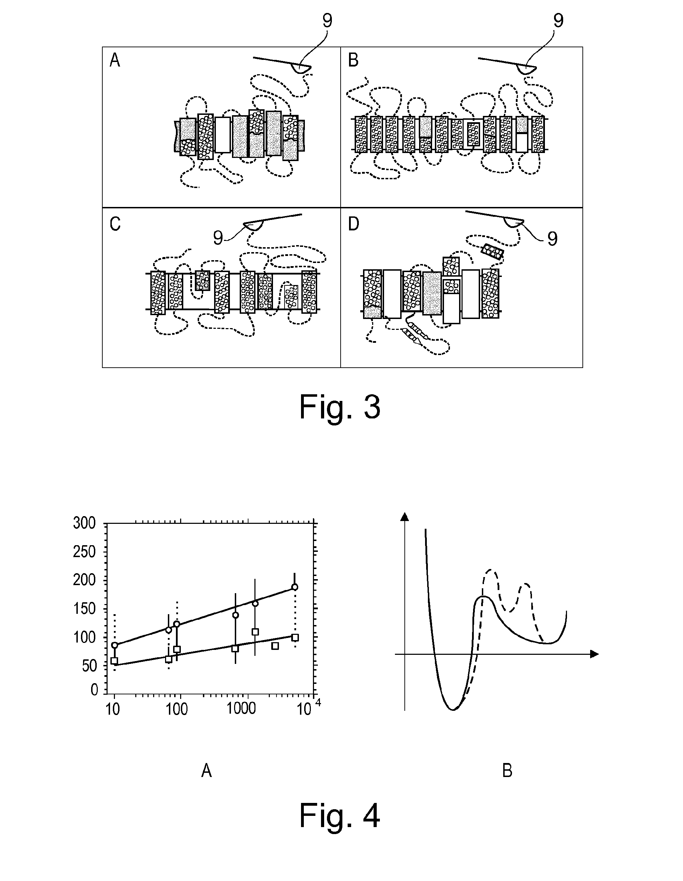

In Fig. 3 the structural regions of membrane proteins are shown which establish molecular interactions. In particular, Fig. 3A shows the structural regions of Bacteriorhodopsin, Fig. 3B of NhaA, Fig. 3C of human aquaporin-1 and Fig. 3D of halorhodopsin.

The SMFS based analysis of membrane proteins provides new knowledge on the function and structure of membrane proteins. In Fig. 3 the structural regions of membrane proteins are shown. Some of these regions establish molecular interactions. Over the last years the structural regions which are stabilized by molecular interactions were identified in several membrane proteins. These proteins are for example Bacteriorhodopsin, halorhodopsin, human aquaporin-1 and NhaA.

The stability analysis of molecular regions of proteins may be accomplished under near physiological conditions. Dynamical properties of the protein under mechanical stress are analyzed. The physiological conditions of the protein may be varied very easily. Therefore, for example the buffer solution is varied with respect to the pH value, the salt content or temperature. The resulting force curves comprise information on changes in the stability of the protein.

With the help of the SMFS method interactions of the membrane proteins with agents may be analyzed on a molecular level. Particularly, the identification of the binding site of the membrane protein is easier and faster as with the help of traditions methods. At the same time information concerning the affinity may be derived from the specific fingerprint received from the interaction measurements. For pharmaceutical research it may be important how intensive the respective agent binds to the membrane protein and how by correspondent manipulation the desired effects may be achieved. By varying the pulling velocity (dynamic force spectroscopy) further information concerning the binding kinetics may be derived.

The velocity dependent force spectroscopy (DFS dynamic force spectroscopy) provides information on the energy landscape of molecular interactions. The interactions may be for example receptor ligand interactions or be based on mechanical characteristics of bio-molecules. The detection of average interaction forces at different pulling velocities allows deriving the width of the potential barrier of the interaction mechanisms. The derived result is the more exact, the bigger the differences in the velocity are. With the help of the knowledge about the potential barrier the binding characteristics of certain ligand and receptors may be determined.

In Fig. 4A the unfolding forces of secondary structures of Bacteriorhodopsin are shown. The measurements are velocity dependent. The x-axis shows the pulling speed in nm/s and the y-axis shows the force in pN. The circles denote the pairwise unfolding of helices E and D of Bacteriorhodopsin and the squares denote the pairwise unfolding of helices C and B.

In Fig. 4B a potential landscape of the secondary structure elements of Bacteriorhodopsin is shown. This potential landscape may be derived from the measurements shown in Fig. 4A. The x-axis in Fig. 4B shows the reaction coordinate i.e. the distance and the y-axis shows the free energy. The solid line represents the simultaneous unfolding process of two helices which results in one potential barrier. The dotted line represents the stepwise (for example sequential) unfolding of two helices which results in two potential barriers.

Furthermore, experiments are possible which allow the detection of ligand binding and activation of a membrane protein:
In experiments with the natrium proton antiporter NhaA of *E. coli* the SMFS method has shown to be a particularly suitable method for detection and localization of sites of molecular interactions of the antiporters. The major structure-function coordinates and thus the physiological activity of the Na⁺/H⁺-Antiporter are influenced by the availability and binding of its cargo or ligands, Na-ions and Protons. With the SMFS-method binding sites of ligands were localized and the influence of the pH value (and thus the availability of protons) on the activity of the natrium/proton antiporter was determined.

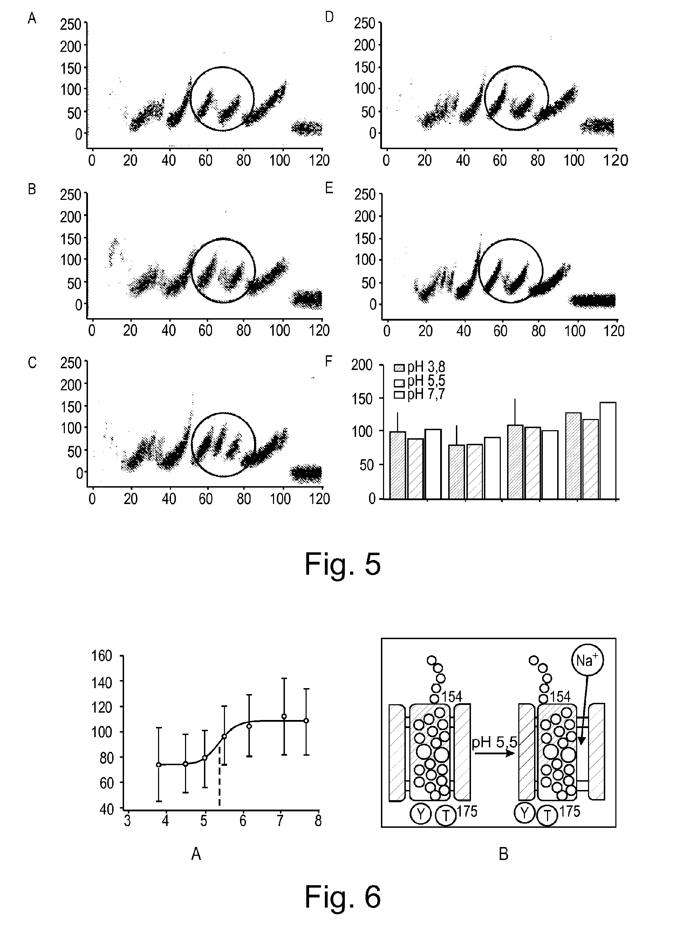

Fig. 5 indicates the intra-molecular interaction forces within the antiporter and the influence of its physiological ligands H⁺ and Na⁺ (on the pH value (H⁺) and the concentration of Na⁺ (the ligand)) which may be derived from the measured and analyzed force-distance curves. The force spectra represent the interactions at the binding site. Furthermore, the force spectra not only represent the interactions within the membrane protein but also are characteristic for the functional state of the protein. Thus also the activity of the analyzed protein may be determined from the measured spectra.

In Fig. 5A to 5E force-distance curves of antiporter NhaA depending on the pH value are shown. In Fig. 5A the pH value correspond to 3.8 (150 mM KCl, 50 mM NaCl), in Fig. 5B to 5.5 (150 mM KCl, 50 mM NACl), in Fig. 5C to 7.7 (150 mM KCl, 50 mM NaCl), in Fig. 5D to 3.8 (200 mM KCl) and in Fig. 5E to 7.7(200 mM KCl). Furthermore, the x-axis in Fig. 5A to Fig. 5E shows the distance i.e. the extension in nm and the y-axis shows the force in pN.

These force-distance curves indicate the intra-molecular interaction forces within the antiporter and may be derived from the measured and analyzed force-distance curves with the help of an embodiment of the method according to the invention.

In Fig. 5F the unfolding forces of the helices are summed up statistically. Therein, the first three columns are representative of the unfolding forces of helices I and II of antiporter NhaA. Column 4 to 6 from the left represent helices III and IV, column 7 to 9 represent helices V and VI and column 10 to 12 represent helices VII and VIII. Furthermore, the darkest column is representative for pH value 3.8, the middle dark is representative for measurements at pH value 5.5 and the lightest column is representative for pH value 7.7. The y-axis shows the unfolding force in pN.

In Fig. 6A the unfolding force (in pN) of the antiporter NhaA is shown as a function of the pH value (y-axis). The activation at a pH value of 5.5 is shown schematically in Fig. 6B. The interaction at the ligand binding site increases with an increasing pH value. At a pH value of 5.5 the antiporter is activated and may bind to Na+ ions. This information is very valuable for researches to gain knowledge on the effectiveness of certain agents.

Data received in experiments described above may be analyzed with the method according to an embodiment of the invention. Furthermore, data to be analyzed with the method according to an embodiment of the invention may be received for example by pulling with an AFM tip at the strands of DNA and acquiring a force-distance curve by measuring the different binding forces between the base pairs G-C and A-T. Thus, data of DNA sequencing may be accessible with the help of the method according to an embodiment of the invention.

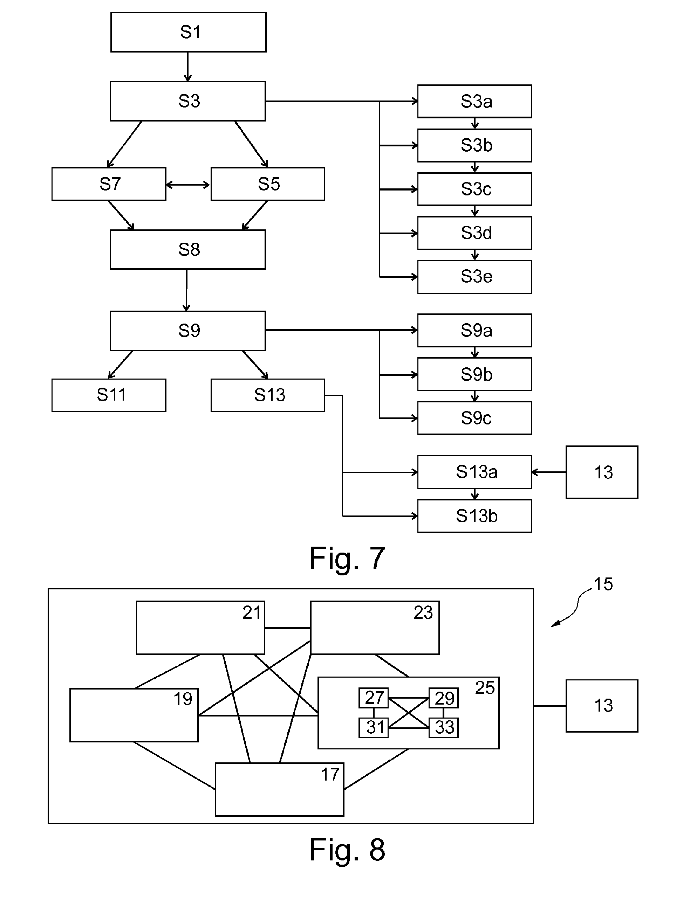

In Fig. 7 a method for automatic analysis of bio-molecules according to an exemplary embodiment of the present invention is presented schematically. In step S 1 a plurality of force-distance curves is provided. In step S3 a plurality of individual measurement points of a force-distance relation are discretized and smoothed. Step S3 may comprise the following sub-steps: determining a free region in step S3a, determining in the free region standard deviations in a force direction and a distance direction in step S3b, dividing the force direction and the distance direction into sections of a width of the standard deviations in step S3c, determining all data points lying in the same section and estimating an error in step S3d and shifting the force-distance curves in step S3e.

The discretized and smoothed curves are processed further in steps S5 and S7 subsequently or in parallel: In step S5 the force-distance curves are filtered and in step S7 a model such as the WLC model, the FJC model or the FRC model is fitted to each of the plurality of force-distance curves. Therein, step S7 and step S5 may be executed completely or partially in parallel. The data produced or resulting in step S7 may be needed for the calculations in step S5. For example the filtering of the force-distance curves in step 5 may require information on the number of possible WLC signals resulting from step S7.

In step S8 the plurality of individual model curves is aligned. Furthermore, the plurality of aligned individual model curves is clustered in step S9. Step S9 may comprise several sub-steps such as: storing for each individual model curve the similarity to other individual model curves and the most similar individual model curves in step S9a, indexing the entries of the database in step S9b and combining the individual model curves into groups in step S9c. Therein, step S9c may further comprise several sub-steps (not shown in Fig. 7) such as: combining in a group the individual model curve having the greatest similarity together with their most similar individual model curves and combining the individual model curves having the second next largest similarity so that when individual groups overlap.

After the clustering in step S9 the interaction energies may be correlated with forces in step S11 and/or the forces of the individual model curves may be correlated with at least one of a secondary and a tertiary structure of the bio-molecule in step S13. Steps S11 and S13 may be executed alternatively, in parallel or subsequently. Therein, step S11 may further comprise representing interaction energies of amino acids of the bio-molecule in an energy profile. Furthermore, step S13 may comprise the following sub-steps: determining information by text mining in step S13a and correlating the information with the forces and the number of extrema of the individual model curves in step S13b. The text mining in step S13a may employ known data from a data base 13 to help interpreting the measured force-distance curves.

In Fig. 8 a device 15 for automatic analysis of bio-molecules according to an exemplary embodiment of the invention is presented schematically. Device 15 comprises several modules 17, 19, 21, 23 and 25 which are connected with each other. Furthermore, the modules 17, 19, 21, 23 and 25 may be connected to a data base 13 which may comprise a memory with known data.

The device 15 comprises the following modules: module 17 for discretizing and smoothing each of an individual measurement point of a force-distance relation, module 19 for filtering force-distance curves exceeding a predetermined threshold, module 21 for fitting a Worm-Like-Chain model to each of the plurality of force-distance curves, module 23 for aligning the plurality of individual model curves and module 25 for clustering of aligned individual model curves. Therein, module 25 may further comprise the following entities: storing entity 27, indexing entity 29, first combining entity 31 and second combining entity 33. The entities 27, 29, 31 and 33 of module 25 are interconnected with each other and possibly further modules 17, 19, 21 and 23.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### List of reference signs

- 1: purple membrane
- 3: trimer of Bacteriorhodopsin
- 5: selected Bacteriorhodopsin
- 7: force-distance curve
- 9: atomic force microscope (AFM) tip
- 11: alpha-helices of Bacteriorhodopsin
- 13: data base
- 15: device for automatic analysis of bio-molecules
- 17: module for discretizing and smoothing each of an individual measurement point of a force-distance relation
- 19: module for filtering force-distance curves exceeding a predetermined threshold
- 21: module for fitting a Worm-Like-Chain model to each of the plurality of force-distance curves
- 23: module for aligning the plurality of individual model curves
- 25: module for clustering of aligned individual model curves
- 27: storing entity
- 29: indexing entity
- 31: first combining entity
- 33: second combining entity
- S1: providing a plurality of force-distance curves of a bio-molecule to be analysed
- S3: discretizing and smoothing each of a plurality of individual measurement points of a force-distance relation
- S3a: determining a free region
- S3b: determining in the free region standard deviations in a force direction and a distance direction
- S3c: dividing the force direction and the distance direction into sections of a width of the standard deviations
- S3d: determining all data points lying in the same section and estimating an error
- S3e: shifting the force-distance curves
- S5: filtering the force-distance curves
- S7: fitting a model to each of the plurality of force-distance curves
- S8: aligning the plurality of individual model curves
- S9: clustering the plurality of aligned individual model curves
- S9a: storing for each individual model curve the similarity to other individual model curves and the most similar individual model curves
- S9b: indexing the entries of the database
- S9c: combining the individual model curves into groups
- S11: representing interaction energies of amino acids of the bio-molecule in an energy profile and correlating the interaction energies with forces
- S 13: correlating forces of the individual model curves with at least one of a secondary and a tertiary structure of the bio-molecule
- S13a: determining information by text mining
- S13b: correlating the information with the forces and the number of extrema of the individual model curves

## Claims

1. Method for an automatic analysis of bio-molecules, the method comprising:
providing a plurality of force-distance curves of a bio-molecule to be analyzed (S1),
fitting a model to each of the plurality of force-distance curves (S7) to obtain a respective individual model curve,
aligning the plurality of individual model curves (S8).

2. Method for an automatic analysis of bio-molecules according to claim 1, the method further comprising filtering force-distance curves (S3) exceeding a predetermined threshold.

3. Method for an automatic analysis of bio-molecules according to any of claims 1 and 2 the method further comprises clustering the plurality of aligned individual model curves (S9).

4. Method for an automatic analysis of bio-molecules according to any of claims 1 to 3, wherein providing a plurality of force-distance curves comprises discretizing and smoothing each of a plurality of individual measurement points of a force-distance relation (S5) by combining the individual measurement points to a force-distance curve, averaging the force-distance curves and shifting the force-distance curves at an normative point of origin.

5. Method for an automatic analysis of bio-molecules according to any of claims 2 to 4, wherein the predetermined threshold is at least one parameter out of a group, the group consisting of a number of extrema of the force-distance curve, the overall shape of the force-distance curve, extreme values of the force-distance curve and the length of the force-distance curve.

6. Method for an automatic analysis of bio-molecules according to any of claims 1 to 5, wherein the model is a worm-like-chain model, wherein fitting a worm-like-chain model comprises determining contour lengths for each individual measurement point and combining adjacent contour lengths, wherein extrema from a resulting frequency distribution are used as detected contour lengths.

7. Method for an automatic analysis of bio-molecules according to any of claims 1 to 6, wherein aligning the plurality of individual model curves comprises correcting shifts of the individual model curves, wherein the aligning is carried out as an alignment relative to contour lengths of the individual model curves, so that a plurality of individual model curves overlap.

8. Method for an automatic analysis of bio-molecules according to any of claims 3 to 7, wherein clustering the plurality of aligned individual model curves is carried out based on the result of fitting and aligning with indexing of the individual model curves, the method further comprises storing for each individual model curve the similarity to other individual model curves and the most similar individual model curves (S9a) according to the most agreements in number and position of extrema of the individual model curves as entries in a database,
indexing the entries of the database (S9b) according to the similarity, wherein for all individual model curves the maximum similarity to other individual model curves and the most similar individual model curves are indexed, combining the individual model curves into groups (S9c), wherein first the individual model curve having the greatest similarity together with their most similar individual model curves are combined in a group and
combining the individual model curves having the second next largest similarity so that when individual groups overlap, these groups are entered as offspring of a previous group.

9. Method for an automatic analysis of bio-molecules according to any of claims 1 to 8, wherein the method further comprises correlating forces of the individual model curves and a number of extreme of the individual model curves with at least one of a secondary and a tertiary structure of bio-molecules to be analyzed (S13).

10. Method for an automatic analysis of bio-molecules according to any of claims 4 to 9, wherein discretizing and smoothing of the plurality of measured force-distance curves comprises
determining a free region (S3a) by completely unfolding and separating a bio-molecule to be analyzed from a substrate,
determining in the free region standard deviations in a force direction and a distance direction (S3b),
dividing the force direction and the distance direction into sections of a width of the standard deviations (S3c),
determining all data points lying in the same section and estimating an error (S3d) based on a number of data points per section and the standard deviations and
shifting the force-distance curves (S3e) so that an average of the free region lies at a force of zero and a point at which the force-distance curve changes from negative to positive force for the first time lies at a distance of zero.

11. Method for an automatic analysis of bio-molecules according to any of claims 1 to 10, wherein the method further comprises
representing interaction energies of amino acids of the bio-molecules to be analyzed in an energy profile in the form of an energy over a reaction coordinate for the bio-molecule and
correlating the interaction energies with forces and a number of extrema of the individual model curve so that stable and unstable regions of a protein and possible binding sites can be identified (S11).

12. Method for an automatic analysis of bio-molecules according to any of claims 9 to 11, wherein the method further comprises
determining information by text mining (S13a) about the bio-molecule and possible mutations and their effects and
correlating the information with the forces and the number of extrema of the individual model curves (S13b).

13. Device (15) for automatic analysis of bio-molecules by investigating force-distance curves, the device comprises
a module (17) for discretizing and smoothing each of an individual measurement point of a force-distance relation by combining each of a plurality of individual measurement points to a force-distance curve, averaging the force- distance curve and shifting the force- distance curve at a normative point of origin,
a module (19) for filtering force-distance curves extending a predetermined threshold, wherein the predetermined threshold is at least one parameter out of a group, the group consisting of a number of extrema of the force-distance curve, a position of the force-distance curve, a force of the force-distance curve and the length of the force-distance curve,
a module (21) for fitting a worm-like-chain model to each of the plurality of force-distance curves to obtain a respective individual model curve, wherein the fitting module comprises an entity for determining contour lengths for each individual measurement point and combining adjacent contour lengths, wherein extrema from a resulting frequency distribution are used as detected contour lengths,
a module (23) for aligning the plurality of individual model curves, wherein the module for aligning comprises an entity for correcting shifts of the individual model curves, wherein the aligning is an alignment relative to contour lengths of the individual model curves, so that a plurality of individual model curves overlap,
a module (25) for clustering of aligned individual model curves based on the result of fitting and aligning with indexing of the individual model curves, the module for clustering further comprises
a storing entity (27) for storing each individual model curve the similarity to other individual model curves and the most similar individual model curves according to the most agreements in number and position of extrema of the individual model curves as entries in a database,
an indexing entity (29) for indexing the entries of the database according to the similarity, wherein for all individual model curves the maximum similarity to other individual model curves and the most similar individual model curves are indexed,
a first combining entity (31) for combining the individual model curves into groups, wherein first the individual model curve having the greatest similarity together with their most similar individual model curves are combined in a group and
a second combining entity (33) for combining the individual model curves having the second next largest similarity so that when individual groups overlap, these groups are entered as offspring of a previous group,
wherein the module for discretizing and smoothing, the module for filtering, the module for fitting, the module for aligning and the module for clustering are successively implemented and interlinked in a data processing system so that the forces and the number of extrema of individual model curves can be determined.

14. A computer program comprising a program code for executing the method for an automatic analysis of bio-molecules according to any of claims 1 to 12, which computer program is adapted to run on a computer.

15. A computer program product on a machine-readable carrier being adapted for executing the method for an automatic analysis of bio-molecules according to any of claims 1 to 12, when the computer program runs on a computer.
